# EUROPEAN PATENT APPLICATION

(11) **EP 2 426 467 A1**
(43) Date of publication of application: **07.03.2012**
(21) Application number: 11180169.2
(22) Date of filing: 06.09.2011
(51) Int. Cl.: G01F 1/58

(54) **Presicion fluid flow meter for reduced flows**

(30) Priority: 06.09.2010 AR P010103266
(71) Applicant: MR Technologies, S.A., Ciudad de Buenos Aires (AR)
(72) Inventor: Garnero, Jorge Miguel, CIUDAD DE BUENOS AIRES (AR); Fried, Eduardo David, CIUDAD DE BUENOS AIRES (AR); Martin, Carlos Alberto, CIUDAD DE BUENOS AIRES (AR); Ramia, Maximo Elias, CIUDAD DE BUENOS AIRES (AR)
(74) Representative: Robba, Pierpaolo

(57) **Abstract**

A procedure for determination of reduced flows of fluids of an electromagnetic flow meter which includes the two blocks: One is the sensor tube; and the other is the electronic dedicated to detect, to acquire, and to process the voltage signal; additionally this block contains a radiofrequency transmitter to communicate the acquired data. Additionally the invention possesses a remote wireless receiver sub-block of the communication transmitter which allows to receive the measured data by other components.-

## Description

### BACKGROUND OF THE INVENTION

Considering that nowadays the burst of consciousness comes increasing in relation to water is a non-renewable resource and drinking fresh water involves large investments in processing and distribution. Therefore, there are an increasing number of cities around the world that incorporate fluid-measured service. This makes on one hand the cost of the extraction, processing and distribution of drinking water more equitable when paid on basis of actual consumption.

It is not new that global measurement of drinking water consumption, and is not necessary to move to Europe to observe the use of flow meters to measure home consumption in the Republic of Uruguay applied for more than fifty years. In the Republic of Argentina, the water treatment plant of Buenos Aires, located in the neighborhood of Palermo, was the second largest of the world until almost the end of 20th century. This treatment capacity and seemingly inexhaustible water supply observed in Uruguay, Paraná and of la Plata rivers, yield that the measured per capita and per day water consumption in the city of Buenos Aires exceeds the 670 liters while in London, Europe, it just slightly increased to 370 liters. In other cities of Argentina the situation is different because it is usual that the provision of water is in the hands of cooperatives using the metered service to bill their customers. For all these cases the water supplier companies use mechanical flow meters that are not appropriate to determine accurately the volume consumed. While household consumption measurement is of the utmost importance, it is not the only application of the meter of low flow that is revealed. In effect, taking into account that there are reading errors occur when at low flow of household drinking water consumption volumes, the volumes of products to be fumigated, the volumes to incorporate certain mixtures, etc, and whereas in small consumptions, the volumes registered with the flow meters of the prior art is inaccurate. It is considered that the proposed invention will have immediate acceptance of the drinking water distributor companies, sprayer users and chemical industries to give only some examples. Thus, the differences in registration obtained with measurements of the prior art becomes injustices at the time to proceed to the billing or a waste, or failure, of the sprayed fluids, or a change in the amount, etc.

In the case where the measurement has a direct relationship with the billing, an accurate reading as that obtained with the meter that is proposed, not only avoids any injustice but that eliminates administrative complaints. In these cases, in addition to give course the received administrative complaints; it joins the cost of reversing the negative image that it causes on the economic performance of a company.

Basically, the present invention is a precision flow meter for reduced flow which consists of a body which houses a registry block, a block of electronics and the transmitter of a block of communication, the invention is completed with a receiver sub-block which is separated from the communication block and allows to receive remotely readings obtained by the other block components.

### DESCRIPTION OF THE DRAWINGS

The enclosed drawings are illustrative of the present invention. It is to be understood that the drawings are for illustration purposes only, and are not be construed as limiting in any way.
FIG. 1 schematized perspective view of the magnet, coil, the yoke, polar parts and sensor-tube.
FIG. 2 three blocks diagram that make up the flow meter of the present invention.

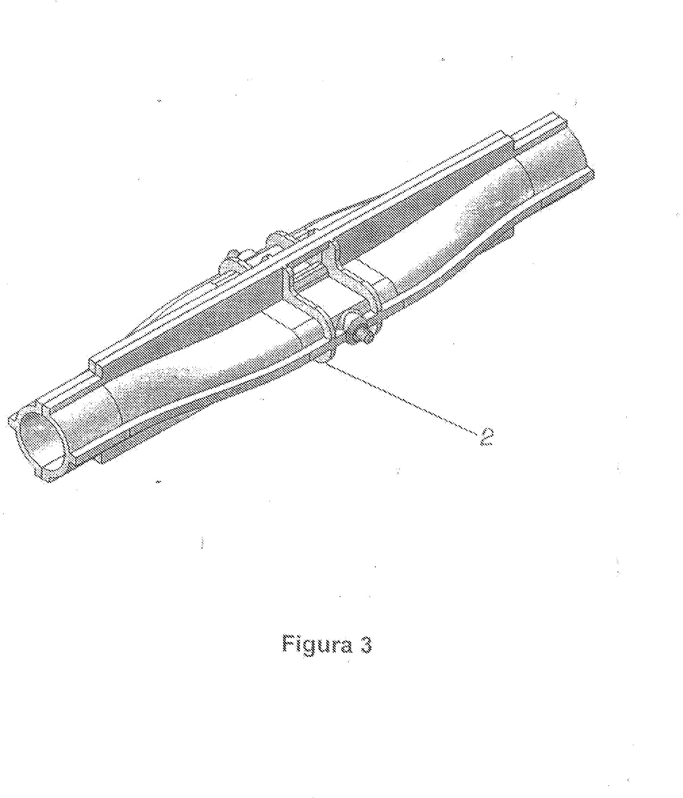

FIG. 3 perspective view of the sensor tube.
FIG. 4 schematic blocks diagram of the electronic circuit detailing the various related components.
FIG. 5 schematized views in perspective from the yoke of the magnet.

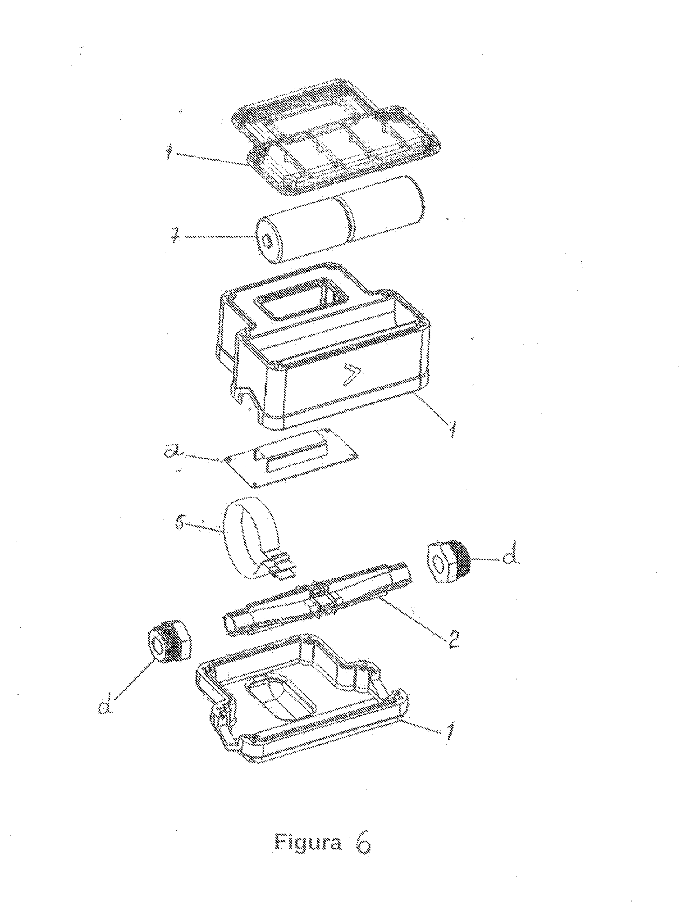

FIG. 6 it maps a perspective view of a cutting where the different components of the invention can be seen.

### REFERENCES

In the above-described figures the same reference characters indicate same or complementary parts. In the drawings: Reference Number 1 is reserved to indicate a housing; Reference Number 2 is reserved to indicate a sensor tube; Reference Number 3 is reserved to indicate an electromagnet; Reference Number 4 is reserved to indicate a coil; Reference Number 5 is reserved to indicate a yoke; Reference Number 6 is reserved to indicate a polar piece; Reference Number 7 is reserved to indicate a power supply; Reference Number 8 is reserved to indicate a microprocessor; Reference Number 9 is reserved to indicate a pulses generator; Reference Number 10 is reserved to indicate a display; Reference Number 11 is reserved to indicate an electrode; Reference Number 12 is reserved to indicate a differential amplifier; Reference Number 13 is reserved to indicate a current amplifier; Reference Letter "a" is reserved to indicate a sensor tube; Reference Letter "b" is reserved to indicate an electronic block; Reference Letter "c" is reserved to indicate a communication block; Reference Letter and Number "c1" is reserved to indicate a radio frequency transmitter of communication block; Reference Letter and Number "c2" is reserved to indicate a receiver separated of communication block; Reference Letter "B" is reserved to establish magnetic flux; Reference Letter "E" is reserved to make reference to induced voltage signal; and, Reference Letter "V" is reserved to make reference to liquid flow velocity. Reference characters B, E and V mentioned above are sub-indexed, meaning they provide a reference to a given parameter.

### SUMMARY OF THE INVENTION

In essence, the present invention features a well known method for determining the flow of fluids where the different mechanical as well as electronic parts have being optimized to the point to make them suitable to be powered by a batteries pack along a period of five years or more. The present invention also features the a radio frequency board dedicated to transmit and to communicate the acquired data to a physically separated receiver sub-block from the communication transmitter, which allows to receive, store and display the measured data. In addition the receiver sub-bloc is built and programmed to collect data from several flow meters, its identification numbers and store them in memory. It also has a USB connector to connect the receiver to an external computer and to transfer the saved information.

### DETAILED DESCRIPTION OF THE PREFERRED EMBODIMENT

The present invention is introduced by means of a purely demonstrative example, which in no means is intended to limit the invention. The components of the present invention could be chosen from various equivalents without altering the principles established in the present invention.

The components of the present invention featured in the design of the sensor tube employed to determine the flow of fluids and the components featured in the electronic block of the flow meter, are established in terms of their relationships and the results they are able to produce. With the end purpose of obtaining a precision fluid flow meter for reduced capable of measuring fluid flow passing through a pipe, as well as having a radio frequency board dedicated to transmit and to communicate the acquired data to a physically separated receiver sub-block from the communication transmitter, which allows to receive, store and display the measured data. Knowing that various fluids are differentiated by their electric conductivity, the method employed to determine the flow of fluids, namely by means of electromagnetic induction, requires that the fluid electric conductivity be larger the 50 micro Siemens in order to measure the fluid flow.

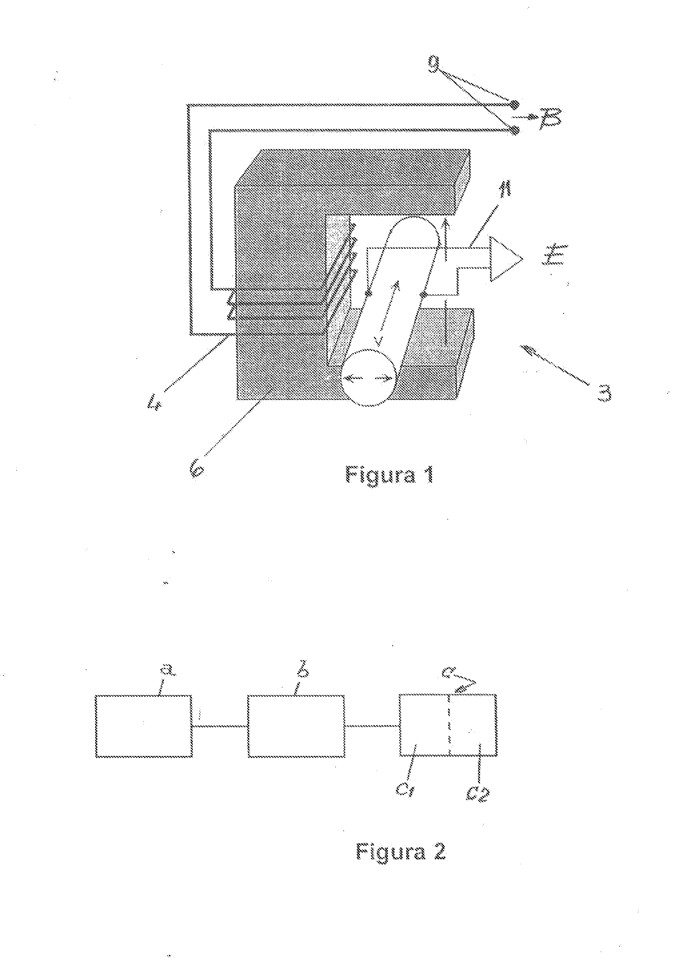

The schematized view of the electro magnet, consisting of a coil "4", the yoke "5", polar pieces "6", the connection to the current pulse generator "9", the electrodes "11", a differential amplifier "12" and sensor-tube of the present flow meter are illustrated in FIG. 1; it also depicts the magnetic flux "B", the induced voltage "E", and the liquid flow velocity "V".

The present flow meter as illustrated in FIG. 2, is made up of three principal elements or blocks. The first block is the sensor tube "a" consisting of a where the fluid flows through, the electrodes to sense the induced voltage "E", and the electromagnet to generate the magnetic flux "B". This second block is the electronic board "b" that is integrated with elements that allow amplification of the induced voltage "E", an analogue to digital converter, a microprocessor and the display unit. The third main block is the communication unit "c" consisting of two separated part; one board is the radio frequency transmitter "c1" which is connected to the electronic board conforming one single block, and in the same housing; the other unit is the receiver "c2" which is separated from the electronic block which in a different and portable housing.

In practice, the blocks "a" and "b" and the "c1" are in the same housing and are arranged in the place where the reading should be done by forming a unit while the receiver sub-block "c2" is delivered to the staff responsible for carrying out the flow meter reading.

The flow meter unit which, as we said, is formed by blocks the sensor tube "a" and the electronics "b" as well as by the transmitter "c1", subset of the communication block "c", are located in a housing "1" made of a material that allows to keep the components isolated from humidity and surrounding water and providing also a corrosion free protection. The upraised of the housing "1" material is preferably a high impact plastic.

The block "a" comprises a sensor tube "2" inserted into the fluid duct to be measured, in other words, while the present invention is aimed at the measurement of low flow, the fluid to be measured, for example, will be used for the provision of drinking water.

The said sensor tube "2" is built of a non-conductive material, as for example a plastic and presents one end of input and one output, both of circular cross section and in the proposed example in the preceding paragraph, provided with standard connection couplings to the water piped of either ½" (12.7 mm) or ¾" (19.1 mm), in any other example, with the couplings corresponding to adapt to the element whose water flow must measured.

The central portion of the sensor tube "2" has a smoothing but without that implying to modify its section area, which remains constant in spite of the generation of a flattened section having two radii of curvature.

The transition from the circular cross section to the oblong cross section is smooth in order to avoid effects upon the flow conditions, namely the geometry of the central portion do not insert dynamic pressure losses due to turbulence.

In this central portion, the oblong shape provides an area of measurement with an adequate value and uniformity of the magnetic flux "B".

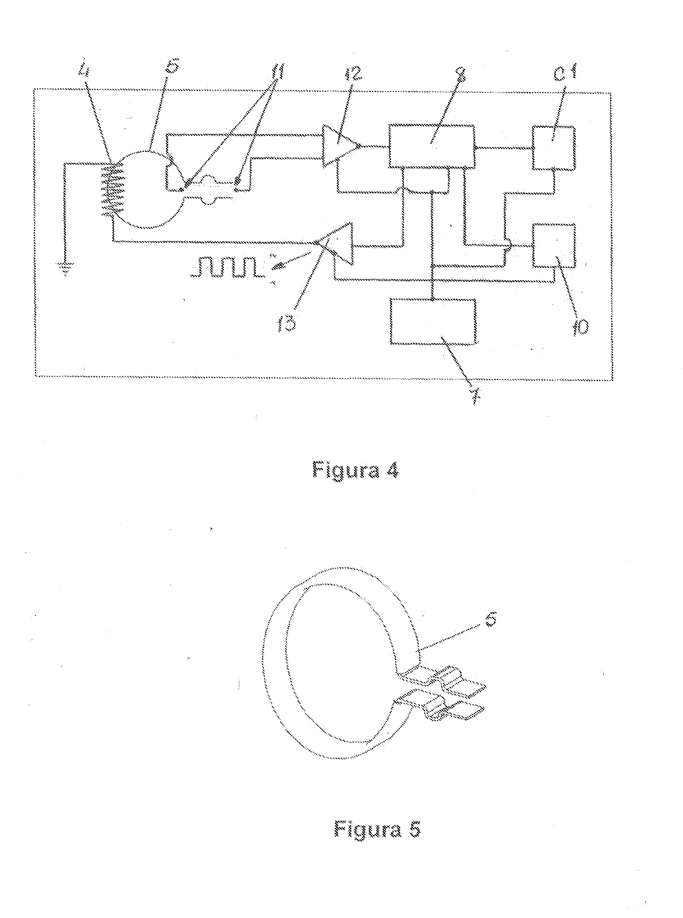

Another component of the block "a" is the electromagnet "3" which, as it is depicted in FIG. 5, comprising a coil "4", a yoke "5", and polar pieces "6".

Bearing in mind that the flow meter power supply "7" in the generality of cases will be a battery, this development has sought to optimize the power consumption and in doing so implementing a special design of the yoke "5" as well as polar pieces "6". Thus, for the construction of the yoke "5" it has been used an alloy of steel of low permeability and has sought a shape almost toroidal in order to reduce the load time of the coil "4". Thus remains as high as possible the magnitude of the magnetic flux "B", since for a Toroidal winding the magnetic flux "B" is proportional to the square of number of turns, while it will be proportional to the number of turns for a straight solenoid. Therefore, as a result of the foregoing, the battery consumption decreases significantly by requiring shorter current pulses.

The polar pieces "6" are built of the same material as that used for the yoke "5" and are made as a continuation of it for the purposes of minimizing losses by reluctance as it would happen if set up as independent components.

On the other hand, and to reduce the losses of the magnetic flux "B" the geometric design of the polar pieces "6" maximizes the homogeneity of the magnetic flux "B" in the volume between them.

Now, out of the volume between the polar pieces "6" the reduction of the magnetic flux "B" is obtained by the introduction of both a curved portion of polar pieces "6" and a rounded format at their ends.

The second block that integrates the flow meter which protection is sought is the electronics "b" block; it consists of a programmable microprocessor "8" which allows the processing and storage of the collected data and is linked to a generator "9" of the pulsed magnetic flux "B" and to a display that allows the visualization of data.

The measurement of the induced voltage signal "E" from the electrodes "11" is amplified by a differential amplifier "12" to be sent to the microprocessor "8" which digitizes, averages and stores in memory flow data after a predetermined time of averaging, the value of the retrieved flow is sent to the display "10" allowing thus to visualize a reading of the instantaneous flow. In addition, the microprocessor "8" generates a train of bipolar square pulses which are transformed into current pulses by a current amplifier "13" that feeds the coil "4" of the electromagnet "3", which in turn generates pulses of alternate magnetic flux "B".

The microprocessor "8" has a connection to the transmitter sub-block "c1", which enables to command the flow meter and to communicate as remote transmission, at distance, the accumulated data. The data transmitted from this sub-block radio frequency transmitter "c1" are received in the sub-block receiver "c2" found in the possession of the person in charge to take the meter readings for later use in control and billing of the service by the water service supplier.

Whereas the transmitter sub-block "c1" has a power that allows an effective transmission up to a distance of approximately 15 to 20 meters, to the person in charge of gathering the readings of the meter; thus it could simply be enough to approach a distance equal to or less than the one mentioned for that to gather the information automatically.

This possibility to obtain measured data without accessing directly to each of the flow meters to personally observe their screens "10" greatly streamlines the work of reading, especially from those connected in residential neighborhoods, or those in dosing tubes or those connected spray machines.

Moreover, the possibility of obtaining readings at distance from the flow meters in places inaccessible to saboteurs and freeing such readings of the access to the place where they are installed, so it is not necessary to get close or to free the access to the reading display. It should also be considered the independence that gives the possibility to obtain readings at distance which allows readings at any time, for example at night or in low traffic condition from a vehicle in motion.

Both the electronic, "b", and the communication, "c", blocks are powered by a supply made up of long-life batteries as preferred form of this invention.

The remote transmission sub-block "c1" at distance of the accumulated data comprises a high frequency (HF) radio frequency (RF) transmitter receiver (a transceiver) that sends and receives commands and/or data and to/from the microprocessor "8", while the receiver sub-block "c2" consists of a transceiver that sends and receives commands and/or data from the transmission sub-block "c1".

In order to facilitate the taking of readings, both sub-blocks transmitter "c1" and receiver "c2" have the capability to store commands and data.

The operator of the receiver sub-block "c2" activates the transceiver that sends a key of recognition to the transceiver from transmitter sub-block "c1" that receives it and retransmits them to the microprocessor "8" that emits a signal of acceptable connection. Once the link is established between both sub-blocks transceivers the transmitter sub-block "c1" transmits the flow meter serial number or the user's one as well as all those relating to flow data that are of interest to the service provider or the person in charge of control. After the data are transmitted, the transceiver from the transmitter sub-block "c1" sends a signal of end of transmission by cutting the link between both sub-blocks.

The information received by the antenna of the receiver sub-block "c2" is stored in the memory and simultaneously emits a luminous signal so that the operator recognizes that the process was completed successfully.

The microprocessor "8" is programmable thus it can be configured such that the data collected by the transmitter sub-block "c1" can be selected conveniently to satisfy the needs of who is in charge of the control. Thus, for example, data to be transmitted may be the instantaneous flow, the average flow, the accumulated consumption of fluid, the time, the date and the serial number of the meter or the user, etc.

The data set stored in the receiver transceiver sub-block "c2" can then be transferred to an external computer directly through a standard USB connection, allowing a later data processing the be used by the service supplier for billing, develop consumer trends, patterns of investment, development, administration, accounting, modify the measured fluid administration, etc.

In this way it has been reported one of the possible sequences of steps that lead to the invention and the way it works, and it is complemented by the synthesis of added documentation of the invention contained in the claims clauses below.

## Claims

1. Precision flow meter for reduced flows, wherein the said sensor that is provided with a housing components, characterized because it integrates with a sensor tube block a block of electronics and a communication block, subdivided into a transmitter sub-block and a receiver sub-block, whose sensor tube block is integrated such that it can be inserted into the pipe of the fluid whose flow must be measure, that it presents one entry end and one end of exit of circular section and a central portion with a flattening that provides an area of measurement with a proper value and uniformity of the magnetic flux; whose sensor tube block includes an electromagnet consisting of one coil, a yoke of quasi toroidal shape and separate polar parts, built as a continuation of the yoke and they present a curved portion and rounded edges; whose electronic block consists of a programmable microprocessor connected to a generator of magnetic flux and a screen which allows the reading of the voltage signal from the electrodes which it has been previously amplified by a differential amplifier; whose microprocessor generates a train of bipolar square pulses transformed into current pulses by a current amplifier that feeds the coil of the electromagnet which, in turn, generates pulses of alternate magnetic flux; whose transmitter sub-block consists of a high-frequency radio frequency transceiver linked to the microprocessor which transfer the data to the receiver sub-block which also has USB port.

2. Flow meter, according to claim number 1, characterized because the sensor tube presents a uniform cross section and the flattening of the central portion does not change the area of the section that remains constant, which posses a section with two radii of curvature, providing an oblong section between circular cross sections having a smooth transition zone that avoids perturbations of the flow conditions.

3. Flow meter, according to claim number 1, characterized because the yoke and the polar parts are built in a steel of low permeability alloy.

4. Flow meter, according to claim number 1, characterized because the electronic and communication blocks of are powered by a power supply consisting of at least one long-life battery.

5. Flow meter, according to claim number 1, characterized because the sensor tube block, the electronic and communication block and the transmitter sub-block, are built in the a casing constructed with the appropriate material to keep these components isolated from humidity and surrounding water providing a free of corrosion housing.

6. Flow meter, according to claim number 1, characterized because the microprocessor samples, averages and stores in memory the flow data and after a predetermined time the processed data is transferred to the display; and whose microprocessor has a connection of command and communication with the transmitter sub-block allowing remote transmission of the accumulated data.

7. Flow meter, according to claim number 1, characterized because the sensor tube block, the electronic block and the transmission sub-block integrated into one unit in the measuring place and the receiver sub-block is mobile and portable.

8. Flow meter, according to claim number 1, characterized because both the transmitter and the receiver sub-blocks have the capability to store commands and data the transmitter sub-block has a power transmission with a range of 15 to 20 meters.

9. Flow meter, according to claim number 1, characterized because the input and the output of the sensor tube are provided with couplings suitable for making a connection with the respective pipes.
